# EUROPÄISCHE PATENTANMELDUNG

(11) **EP 3 112 817 A1**
(43) Veröffentlichungstag der Anmeldung: **04.01.2017**
(21) Anmeldenummer: 16169622.4
(22) Anmeldetag: 13.05.2016
(51) Int. Cl.: G01F 1/34, G01P 5/00, G01P 5/165, G01F 1/46

(54) **MESSVORRICHTUNG UND VORRICHTUNG MIT EINER SOLCHEN MESSVORRICHTUNG**

(30) Priorität: 12.06.2015 DE 102015109416
(71) Anmelder: Rolls-Royce Deutschland Ltd & Co KG, 15827 Blankenfelde-Mahlow (DE)
(72) Erfinder: Lehmann, Martin, 12099 Berlin (DE)
(74) Vertreter: Schmidt, Martin Michael

(57) **Zusammenfassung**

Es wird eine Messvorrichtung (1) mit zumindest einer wenigstens annähernd rohrförmigen Sondeneinrichtung (2) beschrieben, mittels der ein Staudruck, ein Totaldruck oder ein dynamischer Druck einer Strömung (S) bestimmbar ist und die wenigstens zwischen einem ersten Betriebszustand und einem zweiten Betriebszustand verfahrbar ausgeführt ist, wobei die Sondeneinrichtung (2) über eine Stelleinrichtung (3) gesteuert zwischen dem ersten Betriebszustand und dem zweiten Betriebszustand verfahrbar und in diesen haltbar ist.

## Beschreibung

Die Erfindung betrifft eine Messvorrichtung mit zumindest einer wenigstens annähernd rohrförmigen Sondeneinrichtung und eine Vorrichtung, insbesondere eine Strömungsmaschine, gemäß der im Oberbegriff des Patentanspruches 1 bzw. 7 näher definierten Art.

In Strömungsmaschinen bzw. Flugtriebwerken werden unter anderem im Mantelstrombereich zwischen einem Bläser und sogenannten Strömungsleiteinrichtungen bzw. OGVs (outlet guide vanes) zur Staudruckmessung bzw. zur Bestimmung des dynamischen Druckes Messvorrichtungen verwendet. OGVs sind dem Bläser in Strömungsrichtung nachgeordnete und im Mantelstrom des Flugtriebwerkes angeordnete Leitschaufeln, die im Wesentlichen in radialer Richtung durch den Strömungsquerschnitt des Mantelstrombereiches verlaufend angeordnet und mit einen Endbereichen mit den Mantelstrombereichen begrenzenden Bauteilen verbunden sind.

Aus der Praxis bekannte Vorrichtungen zum Messen von Staudrücken im Bereich von Strömungsquerschnitten von Strahltriebwerken werden üblicherweise jeweils an einem äußeren Bereich solcher Strömungsleiteinrichtungen angeordnet. In derartigen Bereichen von Strahltriebwerken angeordnete Messvorrichtungen beeinflussen jedoch nachteilhafterweise die Versuchsergebnisse von Akustikprüfroutinen, mittels welchen ein akustisches Verhalten von Strahltriebwerken ermittelt wird. Dies resultiert aus der Tatsache, dass die im äußeren Bereich der Strömungsleiteinrichtungen angeordneten Messvorrichtungen die Strömung im Strömungsquerschnitt eines Strahltriebwerkes beeinflussen und somit Messergebnisse während einer Akustikprüfung verfälschen.

Um beispielsweise die Beeinflussung einer Akustikprüfung zu vermeiden, werden die Messvorrichtungen daher jeweils vor einer Akustikprüfung demontiert. Mehrere aufeinanderfolgende Staudruckmessungen und Akustikprüfungen verursachen daher hohe Rüstzeiten, die Entwicklungskosten von Strahltriebwerken in unerwünschtem Umfang erhöhen.

Aus der EP 2 221 593 B1 ist eine Messvorrichtung eines statischen Druckes in einer Brennkammer bekannt. Eine Sondeneinrichtung der Messvorrichtung ist im Wesentlichen translatorisch bzw. in axialer Richtung der Messvorrichtung gegenüber einem die Sondeneinrichtung zumindest teilweise umgebenden Gehäuse verfahrbar ausgeführt. Des Weiteren greift an der Sondeneinrichtung eine in Richtung eines ersten Betriebszustandes der Sondeneinrichtung wirkende Federkraft einer Federeinrichtung an, in dem die Sondeneinrichtung weiter aus dem Gehäuse hervorsteht, als dies in einem zweiten entgegen der Federeinrichtung umgeschobenen Betriebszustand der Fall ist.

In Abhängigkeit des jeweils in der Brennkammer vorliegenden statischen Druckes greift an der Sondeneinrichtung eine mehr oder weniger große und der Federkraft der Federeinrichtung entgegengesetzte sowie aus dem statischen Druck resultierende Stellkraft an. Übersteigt diese druckabhängige Stellkraft die Federkraft der an der Sondeneinrichtung angreifenden Federeinrichtung, wird die Sondeneinrichtung gegenüber dem Gehäuse und gegen die Federkraft vom angreifenden statischen Druck verschoben und zunehmend vom Gehäuse aufgenommen. Dabei wird die Sondeneinrichtung solange in axialer Richtung gegen die Feder verschoben, bis ein gehäuseseitiger Anschlag eine weitere Axialbewegung der Sondeneinrichtung verhindert.

Somit bestimmt der in der Brennkammer jeweils vorliegende statische Druck die aktuelle Position der Sondeneinrichtung. Staudruckmessungen sind über den gesamten Betriebsbereich eines Flugtriebwerkes nur bedingt mit der bekannten Messvorrichtung in gewünschtem Umfang durchführbar, denn Druckschwankungen des Staudruckes verursachen Betriebszustandsänderungen im Bereich Messvorrichtung und beeinflussen daher die Messergebnisse in nicht nachvollziehbarem Umfang.

Der Erfindung liegt die Aufgabe zugrunde, einerseits eine Messvorrichtung zum Ermitteln einer Betriebsgröße, insbesondere eines Staudruckes, zur Verfügung zu stellen, mittels der Vorrichtungen, insbesondere Strömungsmaschinen, wie Flugtriebwerke und dergleichen, kostengünstig herstellbar sind, und andererseits eine Vorrichtung zu schaffen, in deren Bereich Staudruckmessungen und Akustikprüfungen mit geringen Rüstzeiten in gewünschtem Umfang durchführbar sind.

Erfindungsgemäß wird diese Aufgabe mit einer Messvorrichtung und einer Vorrichtung gemäß den Merkmalen des Patentanspruches 1 bzw. 7 gelöst.

Die erfindungsgemäße Messvorrichtung umfasst zumindest eine wenigstens annähernd rohrförmige Sondeneinrichtung, mittels der eine Betriebsgröße, insbesondere ein Staudruck, ein Totaldruck, ein dynamischer Druck, eine Temperatur und/oder dynamische Druckschwankungen, einer Strömung bestimmbar ist und die wenigstens zwischen einem ersten Betriebszustand und einem zweiten Betriebszustand verfahrbar ausgeführt ist.

Erfindungsgemäß ist die Sondeneinrichtung über eine Stelleinrichtung gesteuert zwischen dem ersten Betriebszustand und dem zweiten Betriebszustand verfahrbar und in diesen haltbar.

Dies bietet vorteilhafterweise die Möglichkeit, die Sondeneinrichtung unabhängig von den Umgebungsbedingungen der Messvorrichtung zumindest zwischen zwei definierten Stellungen translatorisch und/oder rotatorisch um einen Schwenkpunkt im Raum oder in einer Ebene zu verfahren und in diesen zu halten. In einer ersten Stellung der Sondeneinrichtung ist dann die Staudruckmessung durchführbar. In der zumindest zweiten Stellung der Sondeneinrichtung ist diese bei entsprechender Anordnung der Messvorrichtung gegenüber dem die Strömung führenden Strömungsquerschnitt derart angeordnet, dass die Strömung durch die Sondeneinrichtung nicht beeinflusst wird und die Akustikprüfung unverfälschte Messergebnisse liefert.

Die erfindungsgemäße Messvorrichtung bietet dabei den besonderen Vorteil, dass sich eine Akustikprüfung an eine Staudruckmessung im Bereich eines Flugtriebwerkes oder eine sich an eine Akustikprüfung anschließende Staudruckmessung ohne eine Montage oder eine Demontage einer bekannten Messvorrichtung nahtlos anschließen kann, da die Sondeneinrichtung hierfür lediglich aktiv zwischen den beiden Betriebszuständen bzw. Stellungen zu verfahren und in diesen zu halten ist. Somit sind aufeinanderfolgende Akustikprüfungen und Staudruckmessungen mit geringen Rüstzeiten auf kostengünstige Art und Weise im gewünschtem Umfang durchführbar.

Bei einer vorteilhaften Ausführungsform der erfindungsgemäßen Messvorrichtung ist die wenigstens eine Sondeneinrichtung über die Stelleinrichtung in axialer Richtung verfahrbar ausgeführt und ein Abstand zwischen einem der Strömung zugewandten Endbereich der wenigstens einen Sondeneinrichtung und der Stelleinrichtung im ersten Betriebszustand größer als bei Vorliegen des zweiten Betriebszustandes der Sondeneinrichtung, womit die Sondeneinrichtung vorteilhafterweise mit ihrem der Strömung zugewandten Endbereich in unterschiedlichen Bereichen der Strömung anordenbar ist bzw. in diese eingreifend oder aus diesen herausführbar ist.

Die Sondeneinrichtung ist bei einer konstruktiv einfachen und kostengünstigen Ausführungsform der erfindungsgemäßen Vorrichtung als eine Pitotsonde ausgebildet.

Stellt die Sondeneinrichtung eine Kielsonde dar, ist die Messgenauigkeit während der Bestimmung des Staudrucks einer Strömung in geringerem Umfang vom Anströmwinkel der Strömung im Bereich der Sondeneinrichtung abhängig als bei anderen Sondeneinrichtungen zum Bestimmen eines Staudrucks.

Die Sondeneinrichtung wird bei weiteren vorteilhaften Ausführungsformen der erfindungsgemäßen Messvorrichtung fluidisch, mechanisch und/oder elektrisch zwischen dem ersten Betriebszustand und dem zweiten Betriebszustand verfahren und in diesen gehalten. Dabei ist eine fluidische Betätigung durch einen geringen Bauraumbedarf bei gleichzeitig geringem Wartungsaufwand gekennzeichnet, während eine elektrische Betätigung der Sondeneinrichtung mit geringem Verschleiß durchführbar ist.

Ist die Sondeneinrichtung über ein Verbindungsmittel mit einer Steuereinheit verbunden, ist die Steuereinheit konstruktiv einfach außerhalb eines Strömungsquerschnittes anordenbar, in dessen Bereich die Staudruckmessung durchgeführt wird.

Die erfindungsgemäße Vorrichtung, insbesondere eine Strömungsmaschine, weist wenigstens ein einen Strömungsquerschnitt begrenzendes Bauteil und mindestens eine im Wesentlichen in radialer Richtung in den Strömungsquerschnitt eingreifende Strömungsleiteinrichtung auf.

Wenigstens eine erfindungsgemäß ausgeführte Messvorrichtung ist zumindest teilweise im Inneren der Strömungsleiteinrichtung angeordnet, womit auf einfache Art und Weise verhindert wird, dass die Messvorrichtung die Strömung beeinflusst.

Zusätzlich ist das der Strömung zugewandte Ende der Sensoreinrichtung bei entsprechender Anordnung der Messvorrichtung in der Strömungsleiteinrichtung im ersten Betriebszustand derart in die Strömung vorkragend angeordnet, dass mit der Messvorrichtung eine Staudruckmessung durchführbar ist. Im zweiten Betriebszustand ist das der Strömung zugewandte Ende der Sensoreinrichtung dann derart gegenüber der Strömung positionierbar, dass die Strömung durch die Sensoreinrichtung und die Messvorrichtung nahezu unbeeinflusst ist, was besonders vorteilhaft für Akustikprüfungen ist, während welchen die Messvorrichtung nicht benötigt wird.

Ist mindestens eine durch einen äußeren Bereich der Strömungsleiteinrichtung führende und mit der Sondeneinrichtung korrespondierende Öffnung vorgesehen, durch die die Sondeneinrichtung hindurch in den ersten Betriebszustand und in den zweiten Betriebszustand verfahrbar ist, wird die Strömung im Strömungsquerschnitt von der Messvorrichtung während einer Staudruckmessung nur in geringem Umfang und während einer Akustikprüfung nahezu überhaupt nicht unbeeinflusst.

Der Durchmesser der Öffnung ist bei einer vorteilhaften Weiterbildung der erfindungsgemäßen Vorrichtung gleich einem oder kleiner als ein definierter Wert, zu dem das die Strömungsleiteinrichtung umströmende Fluid durch die Öffnung in der Strömungsleiteinrichtung nicht beeinflusst wird. Dies ist insbesondere dann der Fall, wenn sich trotz der Öffnung in der Strömungsleiteinrichtung am äußeren Umfang der Strömungsleiteinrichtung eine entsprechende Grenzschicht ausbildet und die wiederum daran angrenzende Strömung im Bereich der Strömungsleiteinrichtung von der Öffnung unbeeinflusst ist.

Der der Strömung im Strömungsquerschnitt zugewandte Endbereich der Sondeneinrichtung überragt bei einer vorteilhaften Ausführungsform der erfindungsgemäßen Vorrichtung im ersten Betriebszustand der Sondeneinrichtung einen äußeren Bereich der Strömungsleiteinrichtung um einen definierten Abstandswert, zu dem eine Staudruckmessung durchführbar ist. Im Unterschied hierzu weist der der Strömung im Strömungsquerschnitt zugewandte Endbereich der Sondeneinrichtung im zweiten Betriebszustand der Sondeneinrichtung in Bezug auf den äußeren bzw. dem der Strömung zugewandten vorderen Bereich der Strömungsleiteinrichtung eine Position auf, in der eine Beeinflussung der Strömung durch die Sondeneinrichtung unterbleibt.

Ist wenigstens eine Messvorrichtung mit mehreren Sondeneinrichtungen vorgesehen, die wenigstens annähernd parallel zueinander verlaufend und über der Höhe der Strömungsleiteinrichtung zueinander beabstandet angeordnet sind, ist ein Strömungsfeld entlang der Strömungsleiteinrichtung, vorzugsweise entlang einer Vorderkante der Strömungsleiteinrichtung, erfassbar und in gewünschtem Umfang ein Staudruckprofil über der Höhe der Strömungsleiteinrichtung bzw. in radialer Richtung des Strömungsquerschnittes bestimmbar.

Um die von den Sondeneinrichtungen erfassten einzelnen Messwerte aus einem bestimmten Bereich des Strömungsfeldes stromauf der Strömungsleiteinrichtung und damit die jeweils ermittelten Messergebnisse entsprechend vergleichbar und genau zu ermitteln, überragen die der Strömung im Strömungsquerschnitt zugewandten Endbereiche der Sondeneinrichtungen bei einer weiteren vorteilhaften Ausführungsform der erfindungsgemäßen Vorrichtung im ersten Betriebszustand den äußeren Bereich der Strömungsleiteinrichtung um einen wenigstens annähernd gleichen Abstandswert.

Ist die Vorrichtung ein Flugtriebwerk und die Strömungsleiteinrichtung in einem Mantelstrom des Flugtriebwerkes angeordnet, sind Staudruckmessungen und Akustikprüfungen des Flugtriebwerkes in gewünschtem Umfang mit geringem Aufwand auf kostengünstige Art und Weise durchführbar.

Sowohl die in den Patentansprüchen angegebenen Merkmale als auch die in den nachfolgenden Ausführungsbeispielen des erfindungsgemäßen Gegenstands angegebenen Merkmale sind jeweils für sich allein oder in beliebiger Kombination miteinander geeignet, den erfindungsgemäßen Gegenstand weiterzubilden.

Weitere Vorteile und vorteilhafte Ausführungsformen des erfindungsgemäßen Gegenstands ergeben sich aus den Patentansprüchen und dem nachfolgend unter Bezugnahme auf die Zeichnungen prinzipmäßig beschriebenen Ausführungsbeispiel.

Es zeigt:
Fig. 1 eine schematische Darstellung einer Strömungsleiteinrichtung mit einer im Inneren der Strömungsleiteinrichtung angeordneten Messeinrichtung und einer Sondeneinrichtung im ersten Betriebszustand;
Fig. 2 eine schematische Darstellung der Strömungsleiteinrichtung mit der im Inneren der Strömungsleiteinrichtung angeordneten Messeinrichtung und einer Sondeneinrichtung im zweiten Betriebszustand; und
Fig. 3 eine als Kolben-Zylinder-Einheit ausgebildete Stelleinrichtung der erfindungsgemäßen Messvorrichtung, mittels der eine Sondeneinrichtung gesteuert zwischen dem ersten Betriebszustand und dem zweiten Betriebszustand verfahrbar und in diesen haltbar ist.

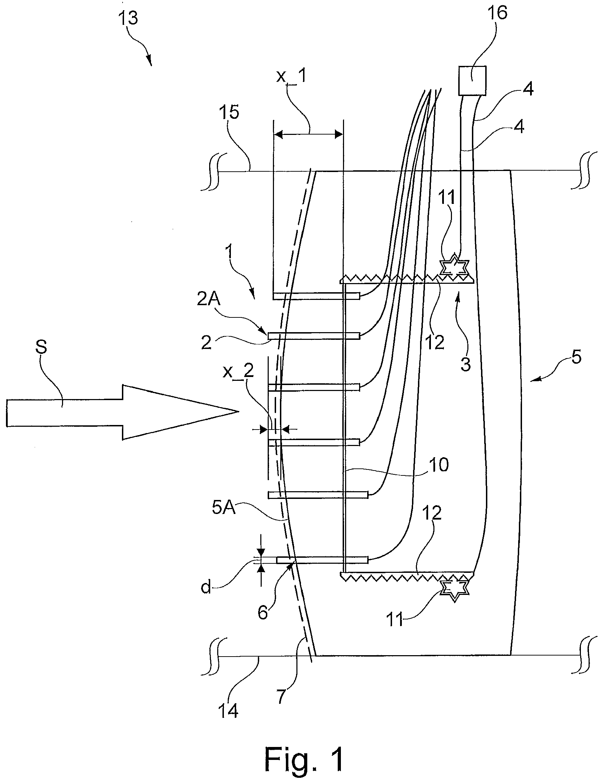

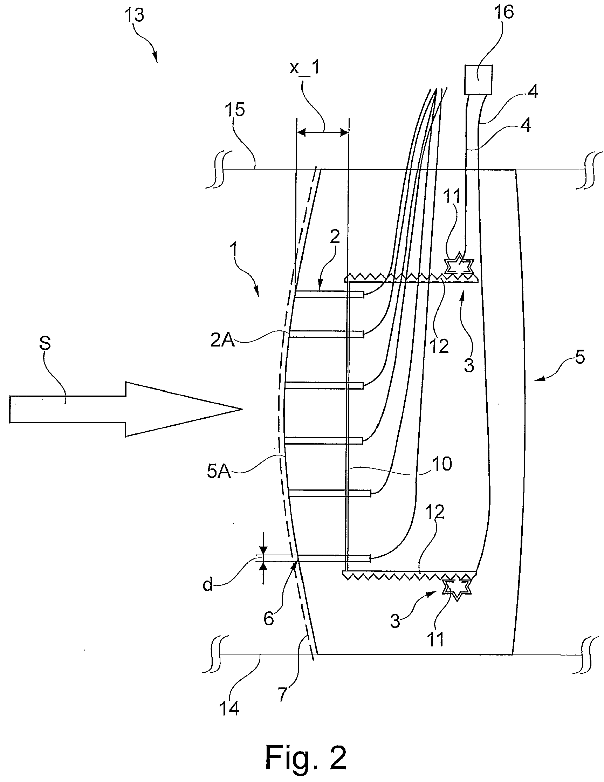

Fig. 1 und Fig. 2 zeigen jeweils Bereiche einer ein Flugtriebwerk darstellenden Vorrichtung 13, die mit einen Strömungsquerschnitt begrenzenden Bauteilen 14, 15 ausgeführt ist. Im Strömungsquerschnitt des Flugtriebwerks 13 wird vorliegend ein Mantelstrom des Flugtriebwerks 13 geführt. Dabei entspricht das Bauteil 15 einer äußeren Triebwerkshülle, während das Bauteil 14 den Mantelstrombereich von einem inneren Triebwerksbereich trennt.

Zwischen dem äußeren Bauteil 15 und dem inneren Bauteil 14 erstrecken sich in an sich bekannter Art und Weise mehrere Strömungsleiteinrichtungen 5, wovon in Fig. 1 und Fig. 2 jeweils eine gezeigt ist. Die Strömungsleiteinrichtung 5 entspricht einer Leitschaufel bzw. einem sogenannten OGV (outlet guide vane), die im Flugtriebwerk 1 einem nicht näher dargestellten Bläser in Strömungsrichtung nachgeordnet im Mantelstrombereich des Flugtriebwerkes 1 angeordnet ist, um die Strömung im Mantelstrombereich stromab des Bläsers in eine möglichst verlustarme und vorzugsweise laminare Strömung überzuführen.

Damit stromauf der Strömungsleiteinrichtungen 5 eine Betriebsgröße wie beispielsweise ein Staudruck, ein Totaldruck und/oder ein dynamischer Druck ermitteln werden kann, sind zumindest im Inneren einer der Strömungsleiteinrichtungen 5 eine oder mehrere Messvorrichtungen 1 mit vorliegend mehreren Sondeneinrichtungen 2 angeordnet. In dem in Fig. 1 und Fig. 2 gezeigten Ausführungsbeispiel der Messvorrichtung 1 umfasst die Messvorrichtung 1 sechs Sondeneinrichtungen 2, die über der Höhe des Strömungsquerschnittes des Mantelstrombereiches des Flugtriebwerkes 13 zueinander beabstandet und wenigstens annähernd parallel zueinander in der Strömungsleiteinrichtung 5 angeordnet sind.

Die Sondeneinrichtungen 2 sind jeweils wenigstens annähernd gleich und rohrförmig ausgebildet und an einem Sondeneinrichtungsträger 10 befestigt. Die Sondeneinrichtungen 2 sind mit Hilfe des Sondeneinrichtungsträgers 10 zwischen einem ersten Betriebszustand und einem zweiten Betriebszustand verfahrbar ausgeführt und in diesen haltbar. Dabei sind die Sondeneinrichtungen 2 vorliegend in Strömungsrichtung der Strömung S im Strömungsquerschnitt des Mantelstrombereiches des Flugtriebwerkes 1 translatorisch bzw. axial verschiebbar ausgeführt.

Zur Verstellung der Sondeneinrichtungen 2 zwischen dem in Fig. 1 dargestellten ersten Betriebszustand und dem in Fig. 2 gezeigten zweiten Betriebszustand ist eine Stelleinrichtung 3 vorgesehen. Die Stelleinrichtung 3 ist über ein Verbindungsmittel 4 mit einer extern des Flugtriebwerkes 13 positionierten Steuereinheit 16 verbunden und wird über diese Steuereinheit 16 angesteuert. Über die Stelleinrichtung 3 werden die Sondeneinrichtungen 2 in den jeweils angeforderten Betriebszustand verfahren und nach Erreichen der gewünschten Position der Stelleinrichtung 3 sowie der Sondeneinrichtungen 2 jeweils in den definierten Positionen gehalten.

Dabei wird vorliegend unter dem Begriff halten nicht nur eine axiale Führung der Sondeneinrichtungen 2 sondern auch ein Arretieren der Sondeneinrichtungen 2 in den jeweils angeforderten Positionen des ersten und des zweiten Betriebszustandes subsumiert.

Die Sondeneinrichtungen 2 werden vorliegend bei der in Fig. 1 und Fig. 2 gezeigten Ausführungsform der Vorrichtung 13 mechanisch über Zahnräder 11 und damit in Eingriff stehenden Zahnstangen 12 zwischen der mit dem ersten Betriebszustand korrespondierenden axialen Stellung und der mit dem zweiten Betriebszustand der Sondeneinrichtungen 2 korrespondierenden axialen Stellung verfahren und jeweils in diesen Stellungen fest gehalten bzw. arretiert. Dabei besteht die Möglichkeit, die Zahnräder 11 über einen oder mehrere Elektromotoren rotatorisch anzutreiben und den rotatorischen Antrieb über die Zahnstange in eine translatorische Betätigungsbewegung der Sondeneinrichtungen 2 umzuwandeln. Die Zahnstangen 12 sind hierfür vorliegend mit dem Sondeneinrichtungsträger 10 verbunden.

Alternativ hierzu besteht auch die Möglichkeit, die Sondeneinrichtungen 2 über anderweitige elektrische Antriebe, beispielsweise über einen Elektromagneten, oder fluidische Aktoren, wie pneumatische oder hydraulische Kolben-ZylinderEinheiten axial zu verstellen.

Eine Messvorrichtung 1 weist mehrere Sondeneinrichtungen 2 auf. In dem in Fig. 1 und Fig. 2 gezeigten Beispiel sind sechs Sondeneinrichtungen 2 in Reihe annähernd parallel zu der Vorderkante der Strömungsleiteinrichtung 5 angeordnet. Die Messvorrichtung 1 ist im Inneren der Strömungsleiteinrichtung 5 angeordnet.

Die Sondeneinrichtungen 2 sind rohrförmig ausgeführt und an einem Sondeneinrichtungsträger 10 befestigt. Die Sondeneinrichtungen 2 sind gemeinsam mit dem Sondeneinrichtungsträger 10 verfahrbar ausgeführt und vorliegend jeweils als Pitotsonde ausgebildet, um den Staudruck der Strömung S in gewünschtem Umfang bestimmen zu können.

Alternativ dazu besteht auch die Möglichkeit, die Sondeneinrichtungen als eine Kielsonde auszuführen, die auch als Kielhead-Sonde oder Kielsches Rohr bezeichnet wird. Eine Kielsonde besteht im Wesentlichen aus einer Venturidüse, in der zusätzlich eine Pitotsonde angeordnet ist. Die Venturidüse einer solchen Kielsonde lenkt während der Staudruckmessung die Strömung S in axialer Richtung um und sorgt somit für eine konstante Anströmung der Pitotsonde. Durch die Umlenkung der Strömung S in axialer Richtung sind die gemessenen Staudruckwerte bis zu einem gewissen Grad unabhängig vom Anstellwinkel der Sondeneinrichtungen 2 gegenüber der Strömung S.

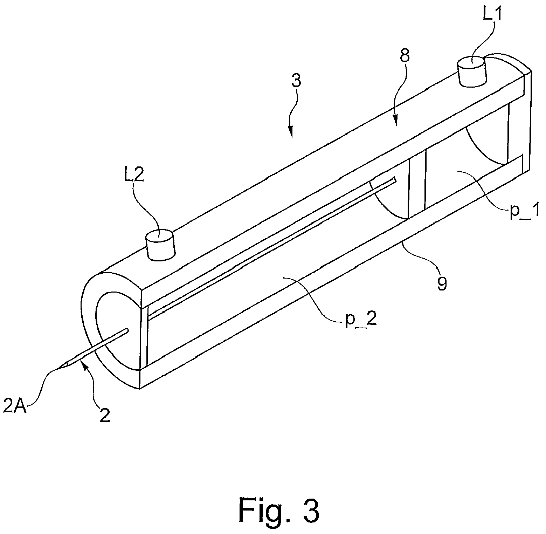

Fig. 3 zeigt eine weitere Ausführungsform der Messvorrichtung 1, bei der eine Sondeneinrichtung 2 fest mit einer Kolbeneinheit 9 verbunden ist. Die Kolbeneinheit 9 ist in einer als Hohlzylinder ausgeführten Zylindereinheit 8 längs verschieblich bzw. in axialer Richtung verschiebbar angeordnet.

Wird im Bereich einer ersten Leitung L1 ein erster Druck p_1 angelegt, wird die Kolbeneinheit 9 gegenüber der Zylindereinheit 8 derart verschoben, dass die Sondeneinrichtung 2 zunehmend aus dem Inneren der Zylindereinheit 8 vorkragt. Zusätzlich ist im Bereich einer zweiten Leitung L2 ein zweiter Druck p_2 an der Kolbeneinheit 9 anlegbar, der dem ersten Druck p_1 entgegenwirkt. Durch ein gezieltes Anlegen der beiden Drücke p_1 und p_2 ist die Sondeneinrichtung 2 in beliebigem Umfang axial verstellbar und beispielsweise im ersten Betriebszustand der Sondeneinrichtung 2 und im zweiten Betriebszustand der Sondeneinrichtung 2 sowie den damit jeweils korrespondierenden axialen Positionen haltbar.

Weiter Bezug nehmend auf die Darstellungen gemäß Fig. 1 und Fig. 2 sind die Sondeneinrichtungen 2 unabhängig von der Ausführung der Stelleinrichtung 3 in der nachstehend näher beschriebenen Art und Weise gegenüber der Strömungsleiteinrichtung 5 verstellbar.

In dem in Fig. 1 gezeigten ersten Betriebszustand sind die Sondeneinrichtungen 2 von der Stelleinrichtung 3 gegenüber der Strömungsleiteinrichtung 5 mit ihren der Strömung S zugewandten Endbereichen 2A von einem ebenfalls der Strömung S zugewandten vorderen Bereich 5A der Strömungsleiteinrichtung 5 um einen Abstand x_2 und von der Stelleinrichtung 3 um den Abstand x_1 beabstandet und kragen in den Strömungsquerschnitt bzw. den Mantelstrombereich des Flugtriebwerks 13 die Sondeneinrichtungen 2 jeweils mit definierter Länge vor. In diesem ersten Betriebszustand der Sondeneinrichtungen 2 ist jeweils eine Staudruckmessung im Bereich der Sondeneinrichtungen 2 durchführbar.

Im Unterschied hierzu weisen die Sondeneinrichtungen 2 in den in Fig. 2 gezeigten Stellungen jeweils ihren zweiten Betriebszustand auf, in den die Endbereiche 2A der Sondeneinrichtungen 2 im Wesentlichen bündig mit dem vorderen Bereich 5A der Strömungsleiteinrichtung 5 abschließen. Daher sind definitionsgemäß der Abstand x_1 zwischen dem der Strömung S zugewandten Endbereich 2A einer der Sondeneinrichtungen 2 und der Stelleinrichtung 3 sowie der Abstand x_2 zwischen dem der Strömung S zugewandten Endbereich 2A einer der Sondeneinrichtungen 2 und dem vorderen Bereich 5A der Strömungsleitvorrichtung 5 im ersten Betriebszustand der Sondeneinrichtung 2 größer als im zweiten Betriebszustand der Sondeneinrichtung 2.

Die bündige Anordnung zwischen dem vorderen Bereich 5A der Strömungsleiteinrichtung 5 und der Endbereiche 2A der Sondeneinrichtungen 2 bewirkt, dass im zweiten Betriebszustand der Sondeneinrichtungen 2 die Strömung S durch die Messvorrichtung 1 nicht beeinflusst wird und im sogenannten eingefahrenen Betriebszustand der Sondeneinrichtungen 2 eine Akustikprüfung des Strahltriebwerkes 13 ohne vorherige Demontage der Messvorrichtung 1 im gewünschten Umfang durchführbar ist.

Der Abstandswert x 2 ist im ersten Betriebszustand der Sondeneinrichtungen 2 so gewählt, dass die Endbereiche 2A der Sondeneinrichtungen 2 nicht nur von dem äußeren Bereich 5A der Strömungsleiteinrichtung 5 beabstandet sind, sondern zusätzlich auch eine sich am äußeren Umfang der Strömungsleiteinrichtung 5 ausbildende Grenzschicht 7 der Strömung S überragen. Die der Strömung S im Strömungsquerschnitt zugewandten Endbereiche 2A der Sondeneinrichtungen 2 liegen somit im ersten Betriebszustand der Sondeneinrichtungen 2 außerhalb der Grenzschicht 7. Damit ist gewährleistet, dass die Ergebnisse der Staudruckmessung die tatsächlich im Mantelstrombereich vorliegenden Druckverhältnisse wiedergeben.

Die Sondeneinrichtungen 2 der Messvorrichtung 1 sind durch im vorderen Bereich 5A vorgesehene Öffnungen 6 der Strömungsleiteinrichtung 5 aus dem Innenraum der Strömungsleiteinrichtung 5 in den Mantelstrombereich des Flugtriebwerks 13 führbar und ragen durch diese Öffnungen 6 in entsprechend verstelltem Betriebszustand aus der Strömungsleiteinrichtung 5 heraus.

Um eine Beeinflussung der Strömung S durch die Öffnungen 6 zu vermeiden, weisen die Öffnungen 6 einen definierten Durchmesser d auf. Oberhalb definierter Durchmesserwerte der Öffnungen 6 wird die Strömung S sowohl im zweiten Betriebszustand der Sondeneinrichtungen 2 als auch im späteren Betrieb des Flugtriebwerkes 13 bei demontierter Messvorrichtung 1 beeinträchtigt, was jedoch unerwünscht ist.

In Abhängigkeit des jeweils vorliegenden Anwendungsfalles besteht auch die Möglichkeit, dass einige der Endbereiche 2A der Sondeneinrichtungen 2 im zweiten Betriebszustand der Sondeneinrichtungen 2 abweichend von der bündigen Anordnung den vorderen Bereich 5A der Strömungsleiteinrichtung 5 in geringem Umfang überragen und zumindest teilweise in die Grenzschicht 7 vorkragen. Des Weiteren kann es auch vorgesehen sein, dass einige der der Strömung S zugewandten Endbereiche 2A der Sondeneinrichtungen 2 im Inneren der Strömungsleiteinrichtung 5 beabstandet vom vorderen Bereich 5A der Strömungsleiteinrichtung 5 angeordnet sind.

Unabhängig von der jeweiligen Stellung der Endbereiche 2A der Sondeneinrichtungen 2 im zweiten Betriebszustand der Sondeneinrichtungen 2 ist auf jeden Fall zu gewährleisten, dass die Sondeneinrichtungen 2 in ihren zweiten Betriebszuständen die die Strömungsleiteinrichtung 5 umströmende Strömung S nicht beeinträchtigen bzw. beeinflussten, um eine Akustikprüfung in gewünschtem Umfang durchführen zu können.

### Bezugszeichenliste

- 1: Messvorrichtung
- 2: Sondeneinrichtung
- 2A: Endbereich
- 3: Stelleinrichtung
- 4: Verbindungsmittel
- 5: Strömungsleiteinrichtung
- 5A: vorderer Bereich der Strömungsleiteinrichtung
- 6: Öffnung
- 7: Grenzschicht
- 8: Zylindereinheit
- 9: Kolbeneinheit
- 10: Sondeneinrichtungsträger
- 11: Zahnräder
- 12: Zahnstange
- 13: Vorrichtung
- 14, 15: Bauteil
- 16: Steuereinheit
- d: Durchmesser
- L1: erste Leitung
- L2: zweite Leitung
- p_1: erster Druck
- p_2: zweiter Druck
- S: Strömung
- x_1: Abstand
- x_2: definierter Abstandswert

## Patentansprüche

1. Messvorrichtung (1) mit zumindest einer wenigstens annähernd rohrförmigen Sondeneinrichtung (2), mittels der eine Betriebsgröße, insbesondere ein Staudruck, ein Totaldruck, ein dynamischer Druck, eine Temperatur und/oder dynamische Druckschwankungen, einer Strömung (S) bestimmbar ist und die wenigstens zwischen einem ersten Betriebszustand und einem zweiten Betriebszustand verfahrbar ausgeführt ist, **dadurch gekennzeichnet, dass** die Sondeneinrichtung (2) über eine Stelleinrichtung (3) gesteuert zwischen dem ersten Betriebszustand und dem zweiten Betriebszustand verfahrbar und in diesen haltbar ist.

2. Messvorrichtung (1) nach Anspruch 1, **dadurch gekennzeichnet, dass** die Sondeneinrichtung (2) über die Stelleinrichtung (3) in axialer Richtung verfahrbar ist und ein Abstand (x_1) zwischen einem der Strömung (S) zugewandten Endbereich der wenigstens einen Sondeneinrichtung (2) und der Stelleinrichtung (3) im ersten Betriebszustand größer ist als bei Vorliegen des zweiten Betriebszustandes der Sondeneinrichtung (2).

3. Messvorrichtung (1) nach Anspruch 1 oder 2, **dadurch gekennzeichnet, dass** die Sondeneinrichtung (2) eine Pitotsonde (2) ist.

4. Messvorrichtung (1) nach Anspruch 1 oder 2, **dadurch gekennzeichnet, dass** die Sondeneinrichtung (2) eine Kielsonde (2) ist.

5. Messvorrichtung (1) nach einem der Ansprüche 1 bis 4, **dadurch gekennzeichnet, dass** die Sondeneinrichtung (2) über die Stelleinrichtung (3) zwischen dem ersten Betriebszustand und dem zweiten Betriebszustand fluidisch, mechanisch und/oder elektrisch verfahrbar ist.

6. Messvorrichtung (1) nach einem der Ansprüche 1 bis 5, **dadurch gekennzeichnet, dass** ein Verbindungsmittel (4) vorgesehen ist, mittels dem die Sondeneinrichtung (2) mit einer Steuereinheit verbunden ist.

7. Vorrichtung (13), insbesondere eine Strömungsmaschine, mit wenigstens einem einen Strömungsquerschnitt begrenzenden Bauteil (14, 15) und mit mindestens einer im Wesentlichen in radialer Richtung in den Strömungsquerschnitt eingreifenden Strömungsleiteinrichtung (5), **dadurch gekennzeichnet, dass** eine Messvorrichtung (1) nach einem der Ansprüche 1 bis 6 zumindest teilweise im Inneren der Strömungsleiteinrichtung (5) angeordnet ist.

8. Vorrichtung nach Anspruch 7, **dadurch gekennzeichnet, dass** mindestens eine durch einen äußeren Bereich (5A) der Strömungsleiteinrichtung (5) führende und mit der Sondeneinrichtung (2) korrespondierende Öffnung (6) vorgesehen ist, durch die hindurch die Sondeneinrichtung (2) in den ersten Betriebszustand und in den zweiten Betriebszustand verfahrbar ist.

9. Vorrichtung nach dem Anspruch 8, **dadurch gekennzeichnet, dass** ein Durchmesser (d) der Öffnung (6) gleich oder kleiner als ein definierter Wert ist, so dass eine Beeinflussung der Strömung (S) unterbleibt.

10. Vorrichtung nach Anspruch 8 bis 9, **dadurch gekennzeichnet, dass** der der Strömung (S) im Strömungsquerschnitt zugewandte Endbereich (2A) der Sondeneinrichtung (2) im ersten Betriebszustand der Sondeneinrichtung (2) den äußeren Bereich (5A) der Strömungsleiteinrichtung (5) um einen definierten Abstandswert (x_2) überragt, zu dem eine Staudruckmessung durchführbar ist, und der der Strömung (S) im Strömungsquerschnitt zugewandte Endbereich (2A) der Sondeneinrichtung (2) im zweiten Betriebszustand der Sondeneinrichtung (2) in Bezug auf den äußeren Bereich (5A) der Strömungsleiteinrichtung (5) eine Position aufweist, in der eine Beeinflussung der Strömung (S) durch die Sondeneinrichtung (2) unterbleibt.

11. Vorrichtung nach einem der Ansprüche 7 bis 10, **dadurch gekennzeichnet, dass** wenigstens eine Messvorrichtung (1) vorgesehen ist, deren Sondeneinrichtungen (2) wenigstens annähernd parallel zueinander verlaufend und über der Höhe der Strömungsleiteinrichtung (5) zueinander beabstandet angeordnet sind.

12. Vorrichtung nach Anspruch 11, **gekennzeichnet dadurch, dass** die der Strömung (S) im Strömungsquerschnitt zugewandten Endbereiche (2A) der Sondeneinrichtungen (2) im ersten Betriebszustand der Sondeneinrichtung (2) den äußeren Bereich (5A) der Strömungsleiteinrichtung (5) um einen annähernd gleichen Abstandswert (x_2) überragen.

13. Vorrichtung nach einem der Ansprüche 7 bis 12, **gekennzeichnet dadurch, dass** die Vorrichtung (13) ein Flugtriebwerk ist und die Strömungsleiteinrichtung (5) in einem Mantelstrom des Flugtriebwerkes (13) angeordnet ist.
